# NEUE EUROPÄISCHE PATENTSCHRIFT

(11) **EP 0 199 891 B2**
(45) Veröffentlichungstag und Bekanntmachung des Hinweises auf die Entscheidung über den Einspruch: **03.08.1994**
(45) Hinweis auf die Patenterteilung: 25.09.1991
(21) Anmeldenummer: 86100644.3
(22) Anmeldetag: 18.01.1986
(51) Int. Cl.: H02B 13/035

(54) **Verbindungsvorrichtung zur Kopplung gasisolierter Schaltanlagen**
Connection arrangement for coupling gas-insulated switchgear
Dispositif de connexion pour des installations de commutation à isolation gazeuse

(30) Priorität: 29.04.1985 DE 3515421
(43) Veröffentlichungstag der Anmeldung: 05.11.1986
(73) Patentinhaber: Felten & Guilleaume Energietechnik AG, D-51058 Köln (DE)
(72) Erfinder: Mooz, Dietrich, Dipl.-Ing., D-4150 Krefeld (DE); Dirks, Rolf, D-4156 Willich (DE)

(56) Entgegenhaltungen:
- EP-A- 0 199 249
- CH-A- 444 253
- DE-A- 2 938 134
- DE-C- 762 266
- DE-U- 6 603 601
- FR-A- 2 498 022
- "Elastimold" ECP Section 9, Seiten 1-4 (Firmendruckschrift)
- "Elastimold" 400 TE/120, Seiten 1-11

## Beschreibung

Die Erfindung betrifft eine Verbindungsvorrichtung für gasisolierte Schaltanlagen gemäß dem Oberbegriff des Anspruchs 1.

Eine gekapselte, isoliergasgefüllte Mittelspannungsanlage mit Durchführungen, die im Inneren der Schaltanlage und nach außen hin jeweils die Form eines Außenkonus aufweisen, its bereits bekannt (DE-OS 32 15 234). Diese Durchführungen sind an der Frontseite der Schaltanlage eingesetzt und dienen dem Anschluß von Kabeln bzw. Hochspannungssicherungen. In der Regel sind derartige Schaltanlagen, wie sie in Netzverteilerstationen eingesetzt werden, mit drei Schaltfeldern ausgestattet, und zwar mit zweimal drei Eingängen und einem Transformatorenabzweig mit drei Hochspannungssicherungen. Eine Erweiterungsmöglichkeit besteht für diese Schaltanlage jedoch nicht, es sei denn, man würde eine dreifeldige Schaltanlage komplett gegen eine vierfeldige austauschen. Dies ist jedoch mit einem erheblichen Montageaufwand verbunden.

Eine Kupplung für elektrische, voll isol ierte Hochspannungsleiter ist aus der CH-A-444 253 (D1) bekannt. Auf den Isolierumhüllungs-Endpartien der beiden zu verbindenden Leiter ist koaxial ein Dielektrikum angeordnet und die Isolierumhüllungen der Leiter und das Dielektrikum weisen nahe zu ihren äußeren Mantelflächen Beläge auf, die elektrisches Erdpotential besitzen. Die Isolierumhüllungen sind zylindrisch gestaltet, koaxial, angeordnet und im Abstand vom Dielektrikum oder einem Zylindergehäuse umgeben, sodaß ein freier Raum für eine Isolierflüssigkeit entsteht. Beide Frontseiten müssen daher mit besonderen Dichtungsringen verschlossen werden.

Aus der nach veroffentlichten EP-0 199 249 B1 ist ein elektrischer Verbinderfür zwei stabförmige und jeweils von einem rotationssymmetrischen Isolier körper umgebene Leiter mit im wesentlichen kreisrunden Querschnitt bekannt, durch den eine vom elektrischen Feld der zu verbindenden Leiter ausgehende Beanspruchung des die Verbindungsstelle umgebenden Isoliermediums, beispielsweise atmoshärische Luft, verringert wird. Dazu sind die beiden Isolierkörper auf einen Teil ihrer Länge gemeinsam von einer Manschette aus elastischem Isolierstoff umgeben, die auch den zwischen den einander zugekehrten Stirnflächen der Isolierkörper vorhandenen Zwischenraum abdeckt und die in diesem Bereich mit einer umlaufenden und einen ebenfalls umlaufenden Hohlraum aufweisenden Wulst versehen ist, wobei die Oberfläche des Hohlraums der Manschette ebenso wie die einander zugekehrten Stirnflächen der Isolierkörper elektrisch leitfähig ist und diese Flächen untereinander und auch mit den Leitern in elektrischer Verbindung stehen. Im übrigen wird die elektrischen Verbindung der stabförmigen Leiter selbst durch eine aus Kontaktlamellen bestehende und hülsenartig beide Leiterendbereiche umgebende Kontaktvorrichtung vorgenommen, die an die Leiterendbereiche mittels Ringfedern andrückbar ist.

Ferner ist in der DE-A-762 266 (D2) eine Schaltanlage für Verteilung elektrischer Energie zurortsfesten (unverfahrbaren) Aufstellung an Orten mit nachgiebigen Boden, der wie in Gruben unter Tage zeitweiligen Verwerfungen ausgesetzt ist, beschrieben. Diese Schaltanlage besteht aus mehreren Schaltgeräten, die jeweils in Grundrahmen eingesetzt sind. Die Sammelschienen benachbarter Schaltgeräte sind dabei untereinander verbunden, wobei die Sammelschienen Verbindungsstücke zum Schutz gegen zufällige Berührung, Beschädigung und Verstaubung mit leicht verformbaren Verkleidungen, wie Harmonikablechen, umgeben sind. Diese verformbaren Verkleidungen sind so geschaffen, daß sie bei starken Verformungen nach Verwerfungen leicht ausgetauscht werden können.

Der Erfinung liegt daher die Aufgabe zugrunde, eine Schaltanlage der eingangs geschilderten Art derart zu ertüchtigen, daß eine beliebige Anzahl von Schaltanlagen aneinandergereiht werden kann und die Sammelschienen der zu verbindenden Schaltanlagen mit relativ einfachen Mitteln miteinander verbindbar sind.

Diese Aufgabe wird erfindungsgemäß durch die in den Kennzeichen des Hauptanspruchs und eines Nebenanspruchs angegebenen konstruktiven Maßnahmen gelöst.

Die mit der Erfindung erzielten Vorteile bestehen darin, daß mehrere Schaltanlagen mit Hilfe einfacher, in den Seitenwänden dieser Anlagen eingesetzter Steck- bzw. Schraubvorrichtungen aneinandergekoppelt werden können.

Vorteilhafte Aus- und Weiterbildungen des Gegenstandes nach dem Hauptanspruch sind in den Unteransprüchen angegeben. So kann man die Verbinder mit einer äußeren und einer inneren Leitschicht versehen, was den Vorteil mit sich bringt, daß damit die Probleme der Feldsteuerung in diesem Bereich gelöst sind (Anspruch 2).

Als besonders zweckmäßig erweist sich eine Ausführungsform, bei welcher die Buchse der Verbindungsvorrichtung bereits in einer der Durchführungen sitzt und der zugehörige Stecker dann in diese Durchführung hineinragt (Anspruch 4). Diese Lösung kann für kleinere Sammelschienen-Nennströme als ausreichend betrachtet werden.

Es ist auch von Vorteil, wenn man den Verbinder aus Silikonkautschukausführt, um etwaige Toleranzprobleme von vornherein auszuschließen (Anspruch 5).

Es bietet sich hier der weitere Vorteil an, daß bei einem Notanschluß Kabelstecker eingesetzt werden können, die in ihrer Funktion ggf. als Lastschaltstecker ausgebildet sind (Anspr. 6).

Ausführungsbeispiele sind in Zeichnungen dargestellt und werden im folgenden näher beschrieben. Es zeigen
Fig. 1 zwei miteinander verbundene Schaltanlagen, in Vorderansicht
Fig. 2 eine Verbindungsstelle von zwei benachbarten Schaltanlagen, in Vorderansicht. im Schnitt
Fig. 4 eine Schaltanlage mit seitlich aufgesteckten Kabelstekkern, in Vorderansicht

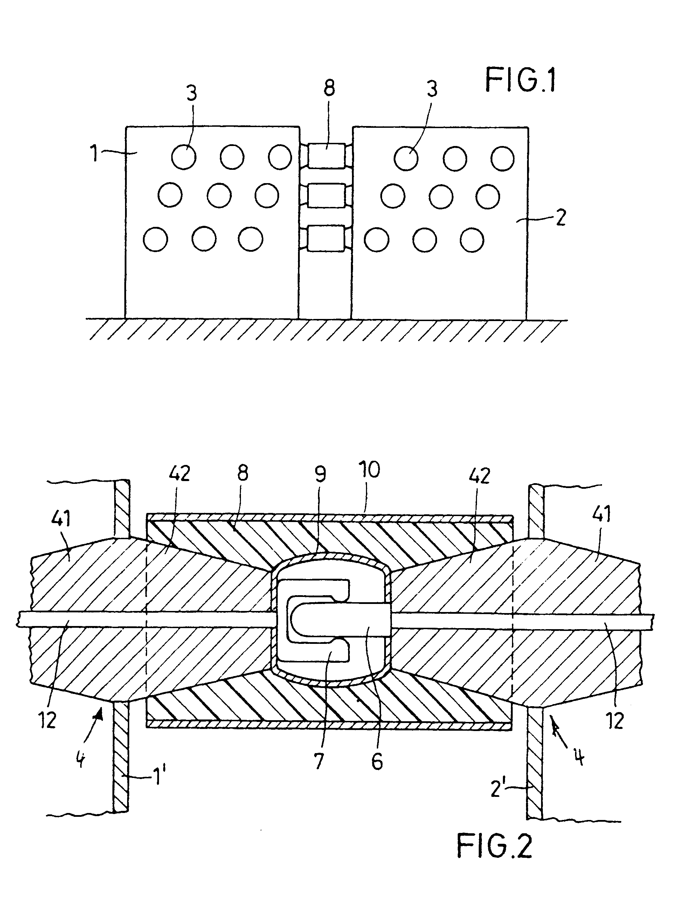

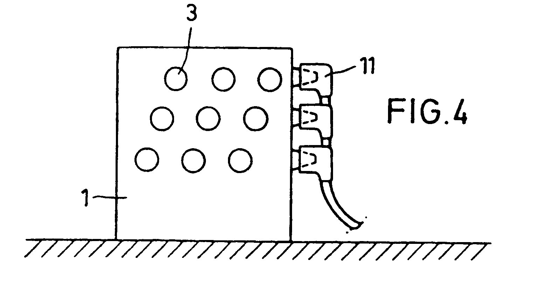

In Fig. 1 sind zwei dreifeldige Schaltanlagen 1,2 dargestellt, die an der Frontseite jeweils neun Durchführungen 3 aufweisen, die für den Anschluß von Steckern bzw. Hochspannungssicherungen vorgesehen sind. Die zugehörigen Sammelschienen beider Schaltanlagen sind in Durchführungen seitlich herausgeführt, steckbar miteinander verbunden und durch Verbinder 8 isolierend abgedeckt.

Fig. 2 zeigt Einzelheiten einer derartigen Verbindungsstelle zwischen zwei benachbarten Schaltanlagen, von denen jeweils die Seitenwände 1' und 2' dargestellt sind. In jeder der Seitenwände ist eine derAnzahl der Sammelschienen entsprechen de Anzahl von Durchführungen 4 eingesetz, die aus einem inneren Außenkonus 41 und einem äußeren Außenkonus 42 bestehen. Innerhalb der beiden Durchführungen befinden sich Sammelschienenenden 12, die an einer Seite mit einem Stecker 6 und auf der anderen Seite mit einer Buchse 7 abgeschlossen sind. Die gesamte Verbindungsstelle wird von einem Verbinder 8 isolierend abgedeckt, der im Innern so beschaffen ist, daß er auf die beiden äußeren Außenkonen 42 aufgeschoben werden kann. Der Verbinden besitzt eine innere Leitschicht 9 und eine äußere Leitschicht 10.

Nach Fig. 4 kann auch ein Einsatz von Kabelsteckern 11 vorgesehen sein, die so gestaltet sind, daß sie auf die äußeren Außenkonen 42 aufgeschoben werden können.

## Patentansprüche

1. Verbindungsanordnung zur Kopplung gasisolierter Schaltanlagen mit in den Seitenwänden (1', 2') der Schaltanlagen (1, 2) eingesetzten und zum Anschluß von Sammelschienen ausgebildeten Durchführungen (4), die im Inneren der Schaltanlagen und nach außen jeweils die Form eines Außenkonus (42) aufweisen, wobei die Sammelschienenenden (12) im Bereich der äußeren Außenkonren (42) angeordnet sind und die Verbindungsstellen der Sammelschienenenden (12) von Verbindern (8) umgeben sind, dadurch gekennzeichnet, daß die Sammelschienenenden (12) der Phasen einer Schaltanlage (1) jeweils mit fest angeordneten Steckern (6) und die Sammelschienenenden (12) der entsprechenden Phasen einer benachbarten Schaltanlage (2) an der zur Schaltanlage mit den Steckern gewandten Seite mit fest angeordneten Buchsen (7) abgeschlossen sind, und daß die Verbinder (8) die Verbindungsstellen durchgehend umhüllend ausgebildet sind und eine der Form der Außenkonen (42) der Durchführungen (4) angepaßte Form von Innenkonen aufweisen.

2. Verbindungsanordnung nach Anspruch 1, dadurch gekennzeichnet, daß jeder Verbinder (8) außen und innen mit einer Leitschicht (9,10) versehen ist und daß die innere Leitschicht (9) mit dem Stecker (6) und/oder der Buchse (7) kontaktierend verbunden ist.

3. Verbindungsanordnung nach einem der Ansprüche 1 bis 2, dadurch gekennzeichnet, daß die Buchse (7) und der Stecker (6) außerhalb der Durchführung (4) miteinander verbindbar sind.

4. Verbindungsanordnung nach einem der Ansprüche 1 bis 2, dadurch gekennzeichnet, daß die Buchse (7) in dem äußeren Außenkonus (42) einer Durchführung (4) eingelassen ist, und daß der Stecker (6) mit der Buchse (7) im Bereich der Durchführung verbindbar ist.

5. Verbindungsanordnung nach einem der Ansprüche 1 bis 4, dadurch gekennzeichnet, daß die Verbinder (8) aus Silikonkautschuk hergestellt sind.

6. Verbindungsanordnung nach einem der Ansprüche 1 bis 5, dadurch gekennzeichnet, daß der Verbinder (8) und der Stecker (6) einstückig als Kabelstecker (11), insbesondere als Lastschaltstecker, ausgebildet sind, wobei der Kabelstecker z. B. für einen Notanschluß in eine der Buchsen (7) der Schaltanlage (1,2) steckbar ist.

## Claims

1. A connection arrangement for coupling gas-insulated switchsets, comprising ducts (4) disposed in the side walls (1', 2') of the switchsets (1, 2) and formed for connecting bus-bars and in each case having the shape inside the switchsets and towards the outside of an external cone (42), the bus-bar ends (12) being arranged in the region of the external cones (42) and the connection sites of the bus-bar ends (12) being enclosed by connectors (8), characterised in that the bus-bar ends (12) of the phases of one switchset (1) are sealed in each case with fixedly arranged plugs (6) and the bus-bar ends (12) of the corresponding phases of an adjacent switchset (2) are sealed with fixedly arranged bushings (7) on the side facing the switchset with the plugs, and the connectors (8) are constructed to enclose the connection sites throughout and are shaped as internal cones to match the shape of the external cones (42) of the ducts (4).

2. A connection arrangement according to claim 1, characterised in that each connector (8) is provided on the outside and inside with a conductive layer (9, 10) and the inner conductive layer (9) is connected in a contacting manner with the plug (6) and/or bushing (7).

3. A connection arrangement according to one of claims 1 to 2, characterised in that the bushing (7) and plug (6) can be connected with one another outside the duct (4).

4. A connection arrangement according to one of claims 1 to 2, characterised in that the bushing (7) is embedded in the outer external cone (42) of a duct (4) and the plug (6) can be connected with the bushing (7) in the region of the duct.

5. A connection arrangement according to one of claims 1 to 4, characterised in that the connectors (8) are made of silicon rubber.

6. A connection arrangement according to one of claims 1 to 5, characterisd in that the connector (8) and plug (6) are integrally formed as a cable plug (11), more particularly as a load-breaking switch plug, the cable plug being insertable, for example for an emergency connection, into one of the bushings (7) of the switchset (1, 2).

## Revendications

1. Dispositif de connexion pour des installations de commutation à isolation gazeuse avec des passages (4) placées dans les parois latérales (1', ', 2') des installations de commutation (1, 2) et formées pour connecter des rails de connexion qui à l'intérieur des installations de commutation ainsi qu'à l'extérieur présentent la forme d'un cône externe (42), les extrémités des rails de connexion (12) étant au niveau des cônes externes (42) et les postes de connexion des extrémités des rails de connexion (12) étant entourées de prises (8), caractérisé en ce que les extrémités des rai Is de connexion (12) des phases d'une installation de commutation (1) sont terminées par des prises fixes (6) et les extrémités des rails de connexion (12) des phases correspondantes d'une installation de commutation voisine (2) sont terminées du côté tourné vers l'installation avec les prises, par des gaines fixes (7) et les connecteurs (8) entourent en continu les postes de connexion et présentent une forme de cône interne adaptée à la forme des cônes externes (42) des passages (4).

2. Dispositif de connexion selon la revendication 1, caractérisé en ce qu'on munit chaque connecteur (8) à l'intérieur et à l'extérieur d'une couche conductrice (9, 10) et que la couche conductrice interne (9) est reliée à la prise (6) et/ou à la gaine (7) en contact électrique.

3. Dispositif de connexion selon l'une des revendications 1 à 2, caractérisé en ce qu'on peut relier la gaine (7) et la prise (6) l'une à l'autre en dehors des passages (4).

4. Dispositif de connexion selon l'une des revendications 1 à 2, caractérisé en ce que la gaine (7) est conservée dans le cône externe (42) d'un passage (4) et qu'on peut relier la prise (6) à la gaine (7) dans la zone de passage.

5. Dispositif de connexion selon l'une des revendications 1 à 4, caractérisé en ce que le connecteur (8) est en caoutchouc au silicone.

6. Dispositif de connexion selon l'une des revendications 1 à 5, caractérisé en ce qu'on réalise en une pièce le connecteur (8) et la prise (6) sous forme de prise de câble (11), notamment comme prise-interrupteur de puissance, la prise de câble pouvant être enfichée, par exemple comme prise de secours, dans l'une des gaines (7) de l'installation de commutation (1, 2).
